Europäisches Patentamt

European Patent Office

Office européen des brevets

(11) Veröffentlichungsnummer: **0 288 797 B1**

(12) **EUROPÄISCHE PATENTSCHRIFT**

(45) Veröffentlichungstag der Patentschrift: **17.06.92**

(21) Anmeldenummer: **88105599.0**

(22) Anmeldetag: **08.04.88**

(51) Int. Cl.⁵: **B29C 53/84**, B29C 53/60,
B29C 65/08

(54) **Vorrichtung zur Herstellung eines gewickelten Kunstoffrohres.**

(30) Priorität: **14.04.87 CH 1449/87**

(43) Veröffentlichungstag der Anmeldung:
**02.11.88 Patentblatt 88/44**

(45) Bekanntmachung des Hinweises auf die
Patenterteilung:
**17.06.92 Patentblatt 92/25**

(84) Benannte Vertragsstaaten:
**AT BE DE ES FR GB GR IT NL SE**

(56) Entgegenhaltungen:
**WO-A-83/04196**
**FR-A- 2 076 508**
**US-A- 3 297 802**
**US-A- 4 033 808**

**PATENT ABSTRACTS OF JAPAN, Band 8, Nr.
180 (M-318)[1617], 18. August 1984; & JP-A-59
70 511 (Touyou Kagaku K.K.) 21-04-1984**

(73) Patentinhaber: **AMETEX AG**
**Eternitstrasse 3**
**CH-8867 Niederurnen(CH)**

(72) Erfinder: **Keldany, Rachid**
**Im Aeglisten 3**
**CH-8124 Maur(CH)**
Erfinder: **Shaw, Keith James**
**Rainstrasse 50**
**CH-8808 Pfäffikon(CH)**

(74) Vertreter: **Scheidegger, Werner & Co.**
**Siewerdtstrasse 95**
**CH-8050 Zürich(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Vorrichtung zur Herstellung eines aus Bandmaterial gewickelten Rohres, mit einer stationären Wickeltrommel, an deren Mantelinnenseite ein seitlich zugeführtes Kunststoffband schraubenlinienförmig zu einem Rohr gewickelt und dabei aneinander angrenzende Bandkanten miteinander verbunden werden, ferner mit Mitteln zum Zuführen und Vorschieben des Bandmaterials und Mitteln, um die Bandkanten miteinander zu verbinden, wobei der Trommelmantel aus einer Vielzahl stabförmiger, zylindrischer Elemente gebildet ist, welche sich zwischen den beiden Stirnflanschen der Trommel erstrecken.

Die Herstellung von Kunststoffrohren im sogenannten Wickelverfahren ist bekannt. Dabei wird üblicherweise ein Kunststoffband entweder auf einem Dorn schraubenlinienförmig gewickelt oder dann, dies insbesondere bei grösseren Durchmessern, ein solches Kunststoffband im Innern einer Trommel ebenfalls schraubenlinienförmig zu einem Rohr ausgebildet. Die schraubenlinienförmig verlaufende Naht von aneinanderstossenden Bandseitenkanten wird entweder mechanisch zugehalten und/oder verschweisst oder verklebt.

Die vorliegende Erfindung bezieht sich auf eine Vorrichtung zur Herstellung solcher gewickelten Rohre. Ueblicherweise werden derartige Vorrichtungen am Ort eingesetzt, d.h. die Rohre dort hergestellt, wo sie auch eingesetzt werden. Dies erfolgt beispielsweise an Orten, wo beschädigte Rohrleitungen renoviert bzw. ausgebessert werden müssen, und dies durch Einschieben eines passend hergestellten Kunststoffrohres. Es hat sich dabei als besonders geeignet erwiesen, zu diesem Zweck das einzusetzende Kunststoffrohr ebenfalls in situ, d.h. am Ort selbst zu erzeugen und das im Aufbau begriffene Rohr gleichzeitig in die zu reparierende Rohrleitung einzuschieben. Die entsprechende Vorrichtung wird dabei oft von oben in einen Schacht eingeführt.

Die bisher bekannten Rohrwickelvorrichtungen, welche mit einer Trommel arbeiteten, sind üblicherweise von einer vollwandigen Trommel gebildet, oder aber von einer Trommel, deren Mantel aus sich zwischen zwei Stirnflanschen erstreckenden, stabförmigen, zylindrischen Elementen gebildet ist. Solche Rollen wurden bei neueren Vorrichtungen frei drehbar zwischen den Stirnflanschen angeordnet, um damit der Reibung zwischen dem Band bzw. dem sich in Bildung begriffenen Rohr und der Mantelinnenseite entgegenzuwirken und damit diese Reibung möglichst stark zu reduzieren. Die Reibung wurde auch auf andere Weise herabesetzt, indem beispielsweise Oberflächen mit möglichst geringem Reibungskoeffizienten oder sogar Gleitmittel eingesetzt wurden.

Aus WO-A-83/04 196 ist bereits eine Rohrwickelvorrichtung mit einer Käfigtrommel der eingangs beschriebenen Art bekannt. Die frei drehbaren stabförmigen Käfigelemente sind in einem Gestell mit grossem Platzbedarf angeordnet, dies im Hinblick auf einen Mechanismus zum Verstellen des Käfigdurchmessers. Die bekannte Vorrichtung ist zum Wickeln von Rohren geeignet, nicht aber zum gleichzeitigen Vortrieb des gebildeten Rohres. Es wird zwar eine Ausführungsform kurz beschrieben, bei welcher die stabförmigen Elemente zur Unterstützung des Antriebes des Bandmaterials angetrieben sind. Dieser Antrieb ist jedoch unzuverlässig sobald ein Widerstand auftritt, z.B. beim Verschieben des Bandmaterials, so dass zusätzliche Einzugs- und Einschubantriebe unbedingt erforderlich sind. Zum Vortrieb des gebildeten Rohres in eine bestehende Rohrleitung würden aber auch diese Vorkehren nicht ausreichen.

Die vorliegende Erfindung bezweckt nun nicht nur eine Herabsetzung der bei bekannten Vorrichtungen auftretenden störenden Reibung, sondern eine Ausnützung dieser Reibungskräfte zum Antrieb des sich in Bildung begriffenen Rohres, bzw. zum Vortrieb dieses Rohres in eine bestehende Rohrleitung, dies bei einfachstem Aufbau der Wickelvorrichtung.

Die Vorrichtung zur Herstellung von gewickelten Rohren aus Kunststoffbändern der eingangs beschriebenen Art zeichnet sich erfindungsgemäss dadurch aus, dass eine Anzahl der den Trommelmantel bildenden stabförmigen Elemente feststehend zwischen den Stirnflanschen der Trommel angeordnet sind und zusammen das tragende Gerüst der stationären Trommel bilden, während mindestens jedes zweite stabförmige Element drehbar in den Stirnflanschen gelagert und durch einen gemeinsamen Antrieb über durch den einen Stirnflansch führende Antriebsköpfe am einen Ende der stabförmigen Elemente erfolgt.

Durch die angetriebenen Trommelelemente, deren Umfangsgeschwindigkeit mindestens gleich gross sein muss wie die Antriebsgeschwindigkeit des Bandmaterials, wird dank der zwischen diesen und dem Rohrmaterial vorhandenen Reibung der Rohrantrieb bzw. der simultane Vortrieb des Rohres unterstützt. Damit ist es möglich, sehr grosse Rohrlängen zu produzieren und vorzutreiben. Die hohen Biegekräfte im Bandmaterial aus Kunststoff und deren Reaktion auf die den Trommelmantel bildenden zylindrischen Elemente, welche wenigstens zum Teil angetrieben sind, bewirkt, dass sich das Band bzw. das Rohr in Umfangs- und Vortriebsrichtung bewegt.

Die stabförmigen Elemente sind vorzugsweise in regelmässigen Winkelabständen zwischen den Stirnflanschen angeordnet, wobei beispielsweise jedes zweite Element angetrieben sein kann. Die angetriebenen Elemente werden auch als Umfangsrollen bezeichnet.

Diese angetriebenen Elemente werden vorzugsweise von einem gemeinsamen Antrieb angetrieben, welcher auch gleichzeitig als Antrieb für die Mittel zum Zuführen und Vorschieben des Bandmaterials vorgesehen sind. Der Antrieb der genannten Elemente bzw. Umfangsrollen erfolgt beispielsweise über eine Kette, einen Zahnriemen oder dergleichen, welcher auf Antriebsköpfe am einen Ende der stabförmigen Elemente wirkt.

Vorzugsweise führen dabei die angetriebenen stabförmigen Elemente durch die eine Stirnwand der Trommel hindurch und die genannten Antriebsköpfe sind auf der Aussenseite der Stirnwand angeordnet.

Grundsätzlich ist vorgesehen, dass die Drehgeschwindigkeit der angetriebenen Elemente, d.h. deren Umfangsgeschwindigkeit gleich gross ist wie die Antriebsgeschwindigkeit für das Bandmaterial bzw. die Vortriebsgeschwindigkeit für das gebildete Rohr. An sich ist es jedoch denkbar, dass die Umfangsgeschwindigkeit der angetriebenen Umfangsrollen etwas höher ist als die Bandantriebsgeschwindigkeit, da damit mit Sicherheit eine positive Wirkung garantiert ist. Die Antriebsgeschwindigkeit dieser Elemente kann auch veränderbar sein.

Die angetriebenen Elemente bzw. Umfangsrollen können vorzugsweise eine reibungserhöhende Oberfläche aufweisen, beispielsweise mit einem Gummibelag versehen sein, eine aufgerauhte oder strukturierte Oberfläche aufweisen oder dergleichen.

Bei dieser Vorrichtung werden die aneinander angrenzenden Bandkanten entweder mechanisch miteinander verbunden und/oder durch Verschweissen oder Verkleben aneinander festgemacht.

Bei einer besonders geeigneten Ausführungsform der vorliegenden Erfindung sind Mittel vorgesehen, um die aneinander angrenzenden Bandkanten miteinander zu verschweissen. Diese Mittel umfassen vorzugsweise eine Ultraschall-Schweisseinrichtung, welche in Nähe des Austrittsendes der Wickeltrommel angeordnet sind.

Die Erfindung wird nachstehend anhand von in der Zeichnung dargestellten Ausführungsbeispielen noch etwas näher erläutert. Es zeigt:

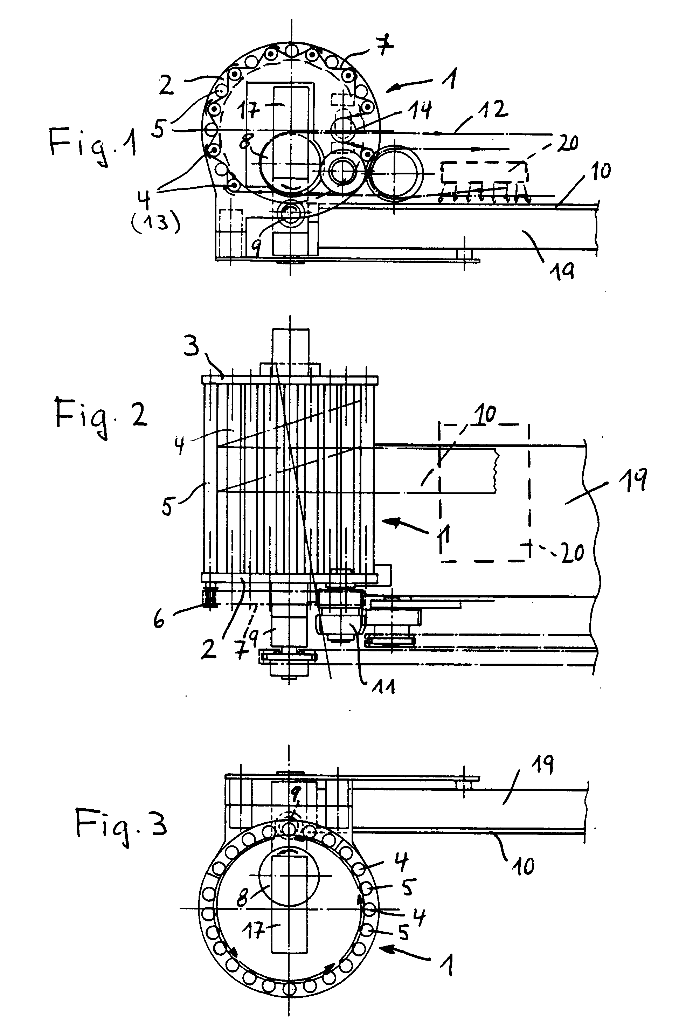

Fig. 1 eine schematische Ansicht auf die Antriebsstirnseite einer Rohrwickelvorrichtung nach der Erfindung;

Fig. 2 eine Draufsicht auf die Vorrichtung nach Fig. 1;

Fig. 3 eine Ansicht auf die Austrittsstirnseite der Vorrichtung, und

Fig. 4 und 5 ähnliche Ansichten wie Fig. 2 und 3 mit zusätzlich im Austrittsende der Trommel angeordneter Ultraschall-Schweisseinrichtung.

Die in der Zeichnung gezeigte Rohrwickelvorrichtung besteht zur Hauptsache aus einer sogenannten Wickeltrommel 1. Diese besteht beim gezeigten Ausführungsbeispiel aus einer stationären, käfigartigen Trommel 1 mit einem Eintrittsstirnflansch 2 und einem Austrittsstirnflansch 3, welche durch stabförmige, zylindrische Elemente 4,5 miteinander verbunden sind. Die Elemente 4 sind dabei feststehend zwischen den Stirnflanschen 2,3 angeordnet und bilden zusammen das tragende Gerüst der stationären Trommel 1. Zwischen den feststehenden Verbindungselementen 4 ist jeweils ein um seine Längsachse drehbar angeordnetes Element 5, eine sogenannte Umfangsrolle vorgesehen. Die Elemente 5 werden über ausserhalb des Stirnflansches 2 vorgesehene Antriebsköpfe 6 mittels eines Ketten- oder Zahnriemenantriebes 7 gemeinsam in Drehrichtung versetzt, und zwar mit einer Umfangsgeschwindigkeit, welche identisch mit der Umfangsgeschwindigkeit der eigentlichen, an sich bekannten Rohrantriebrollen 8,9 ist. Diese Rollen ziehen das zur Bildung des Rohres vorgesehene Kunststoffband 10 von einer Vorratsrolle ab und stossen dieses auf die Innenseite der Trommel, um dort das eigentliche Rohr zu bilden, wobei diese Antriebskraft gleichzeitig zum Vortrieb des gebildeten Rohres aus der Austrittseite der Trommel heraus dient.

Grundsätzlich wäre es möglich, die Umfangsgeschwindigkeit der Umfangsrollen 5, welche die Trommelinnenseite bilden, etwas höher zu wählen als die eigentliche Rohrantriebsgeschwindigkeit (Schlupf zwischen Rollen und Rohrmaterial möglich).

Dank der angetriebenen Umfangsrollen 5, welche in Durchlaufrichtung des Bandes bzw. Rohres drehen, wird das Rohr zusätzlich von diesen Rollen 6 angetrieben und damit der Rohrantrieb- und -vortrieb unterstützt. Das Bandmaterial 10 wird dank seiner inhärenten Biegekräfte (Vorspannung) auf die Umfangsrollen 5 gedrückt und dank der herrschenden Reibungskräfte zusätzlich angetrieben (Umfangs- und Vortriebsbewegung).

Die angetriebenen Umfangsrollen 5 können vorzugsweise mit einem reibungserhöhenden Belag (Aufgummierung) versehen sein oder eine aufgerauhte bzw. strukturierte Oberfläche aufweisen.

Wie bereits erwähnt, erfolgt der Antrieb der Umfangsrollen 5 vorzugsweise über einen Zahnriemen 7 und Getrieberäder 11 (sphärische Zahnräder) vom eigentlichen Antrieb der Wickelmaschine aus. Der Bandantrieb 8,9 und 12 ist von herkömmlicher Bauart.

Der Zahnriemen 7 kann wie gezeigt, jeweils über Führungsrollen 13 (in Verlängerung der Verbindungsstäbe 4) geführt sein, um mit Sicherheit in die Antriebsköpfe 6 der angetriebenen Umfangsrollen 5 einzugreifen. Eine Spannvorrichtung 14 für den Zahnriemen 7 kann vorgesehen sein.

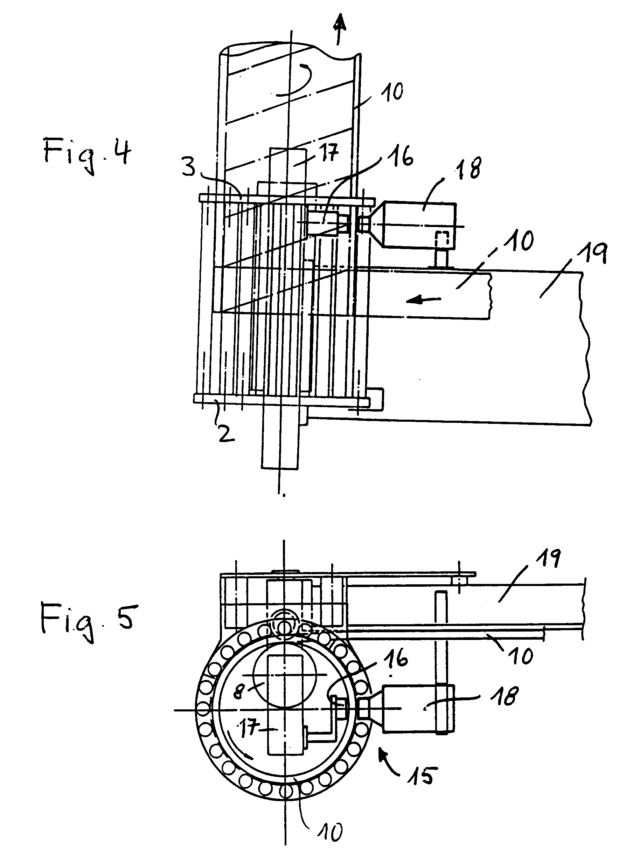

Am Austrittsende der Trommel kann zudem eine Schweisseinrichtung, insbesondere eine Ultraschall-Schweisseinrichtung 15 (siehe Fig. 5) angeordnet sein. Der im Trommelinnern liegende Teil 16 der Schweisseinrichtung 15 ist an einem von der Eintritts-Stirnseite her ins Trommelinnere ragenden Träger 17 befestigt, während der aussenliegende Schweisseinrichtungsteil 18 am eigentlichen Maschinengerüst 19 befestigt ist. Dank der gezeigten Vorrichtung mit dem zusätzlichen Antrieb werden nicht nur Reibungsprobleme auf optimale Weise gelöst, sondern die Vorrichtung vermag im Vergleich zum Stand der Technik wesentlich grössere Rohrlängen zu produzieren und vorzuschieben.

Die Vorrichtung kann mit einer Heizeinrichtung 20 versehen sein, um das in die Trommel einzuführende Bandmaterial zu erwärmen und damit die teilweise beachtlichen inneren Spannungen im Hinblick auf den eigentlichen Formvorgang herabzusetzen.

## Patentansprüche

1. Vorrichtung zur Herstellung eines aus Bandmaterial gewickelten Rohres, mit einer stationären Wickeltrommel, an deren Mantelinnenseite ein seitlich zugeführtes Kunststoffband schraubenlinienförmig zu einem Rohr gewickelt und dabei aneinander angrenzende Bandkanten miteinander verbunden werden, ferner mit Mitteln zum Zuführen und Vorschieben des Bandmaterials und Mitteln, um die Bandkanten miteinander zu verbinden, wobei der Trommelmantel aus einer Vielzahl stabförmiger, zylindrischer Elemente gebildet ist, welche sich zwischen den beiden Stirnflanschen der Trommel erstrecken, dadurch gekennzeichnet, dass eine Anzahl der den Trommelmantel bildenden stabförmigen Elemente (4) feststehend zwischen den Stirnflanschen (2,3) der Trommel (1) angeordnet sind und zusammen das tragende Gerüst der stationären Trommel (1) bilden, während mindestens jedes zweite stabförmige Element (5) drehbar in den Stirnflanschen (2,3) gelagert und durch einen gemeinsamen Antrieb motorisch positiv angetrieben ist, wobei der Antrieb über durch den einen Stirnflansch (2) führende Antriebsköpfe am einen Ende der stabförmigen Elemente (5) erfolgt.

2. Vorrichtung nach Anspruch 1, dadurch gekennzeichnet, dass die stabförmigen Elemente (4,5) in regelmässigen Winkelabständen angeordnet sind und dass mindestens jedes zweite Element (5) angetrieben ist.

3. Vorrichtung nach Anspruch 1 oder 2, dadurch gekennzeichnet, dass die angetriebenen Elemente (5) von einem gemeinsamen Antrieb (7) angetrieben sind.

4. Vorrichtung nach Anspruch 3, dadurch gekennzeichnet, dass der Antrieb (7) über eine Kette, Zahnriemen oder dergleichen erfolgt, welcher auf Antriebsköpfe (6) am einen Ende der stabförmigen Elemente (5) wirkt.

5. Vorrichtung nach Anspruch 4, dadurch gekennzeichnet, dass die angetriebenen stabförmigen Elemente (5) durch die eine Endstirnwand (2) der Trommel (1) hindurchführen und die Antriebsköpfe (6) auf der Aussenseite der Stirnwand (2) angeordnet sind.

6. Vorrichtung nach einem der Ansprüche 1-5, dadurch gekennzeichnet, dass der Antrieb der stabförmigen Elemente (5) über den Antrieb der Bandeinzug- und -vorschubmittel (11) erfolgt, wobei diese Antriebe so aufeinander abgestimmt sind, dass die Umfangsgeschwindigkeit der stabförmigen Elemente (5) gleich der Umfangsgeschwindigkeit der Band- oder Rohrantriebsrollen (8,9) ist.

7. Vorrichtung nach einem der Ansprüche 1-5, dadurch gekennzeichnet, dass die Drehgeschwindigkeit der angetriebenen Elemente (5) veränderbar ist.

8. Vorrichtung nach einem der Ansprüche 1-7, dadurch gekennzeichnet, dass die Oberfläche der angetriebenen Trommelwandelemente (5) mit einem reibungserhöhenden Belag versehen ist oder eine aufgerauhte bzw. strukturierte Oberfläche aufweist.

9. Vorrichtung nach einem der Ansprüche 1-8, dadurch gekennzeichnet, dass die Mittel zum Verbinden der aneinander angrenzenden Bandkanten eine Schweisseinrichtung (15), insbesondere eine Ultraschall-Schweisseinrichtung umfassen.

10. Vorrichtung nach einem der Ansprüche 1-9, dadurch gekennzeichnet, dass Mittel (20) vorgesehen sind, um das Bandmaterial vor dem Einführen in die Trommel zu erwärmen.

## Claims

1. An apparatus for producing a tube wound from a web material, including a stationary winding drum having an inner surface on which a laterally fed plastic material web is wound spirally to a tube while adjoining web edges are bonded together, including further means operative to advance said plastic material web and means operative to bond the web edges to each other, wherein the jacket of the drum is formed by a plurality of rod shaped cylindrical members which extend between the two face flanges of the drum, characterized in that a number of said rod shaped cylindrical members (4) which form the jacket of the drum are securely arranged between the two face flanges (2,3) of the drum (1) and form together the supporting structure of the drum (1), whereby at least every second rod-shaped member (5) is rotatably journalled in said flanges (2,3) and positively driven by a common motor drive, the drive being accomplished via driving heads located at one end of the rod-shaped members (5) and extending through the one of said face flanges (2).

2. The apparatus of claim 1, characterized in that said rod-shaped members (4,5) are arranged in equal angular distances and in that at least every second member (5) is motor driven.

3. The apparatus of claim 1 or 2, characterized in that the driven elements (5) are driven by a commun drive (7).

4. The appratus of claim 3, characterized in that the drive (7) is accomplished via a chain, toothed belt or the like acting onto the driving heads (6) at the one end of the rod-shaped members (5).

5. The apparatus of claim 4, characterized in that said driven rod-shaped members (5) project through one end face wall (2) of said drum (1) and in that said driving heads (6) are located at the outer side of said end face wall (2).

6. The apparatus of any of claims 1-5, characterized in that the drive of said rod-shaped members (5) proceeds via the drive of the web infeeding and advancing means (11), which drives are synchronized such that the circumferential speed of said rod-shaped members (5) equals the circumferential speed of the web or tube driving rollers (8,9).

7. The apparatus of any of claims 1-5, characterized in that the rotational speed of the driven members (5) is adjustable.

8. The apparatus of any of claims 1-7, characterized in that the surface of the driven drum jacket members (5) is provided with a friction increasing layer or comprises a roughened or structured surface.

9. The apparatus of any of claims 1-8, characterized in that said means which are operative to bond the adjoining web edges comprise a welding apparatus (15) specifically an ultrasonic welding apparatus

10. The apparatus of any of claims 1-9, characterized by means (20) for heating said web material prior to the infeed into the drum.

**Revendications**

1. Appareil pour la production d'un tube formé d'une bande de matériel enroulée en hélice, comprenant un tambour d'enroulement stationnaire dont la surface intérieure sert à enrouler en hélice une bande en matériel plastique amenée latéralement pour former un tube en interconnectant les bords latéraux en aboutement de la bande, des moyens pour amener et avancer la bande en plastique et des moyens pour interconnecter les bords latéraux en aboutement de ladite bande, la chemise du tambour étant formée d'un grand nombre d'élément en forme de barres cylindriques s'étendant entre les deux flasques frontales du tambour, caractérisé en ce qu'un certain nombre desdits éléments en forme de barres (4) formant la chemise du tambour sont montés fixe entre les flasques frontales (2,3) du tambour (1) et forment ensemble la structure de support du tambour (1) stationnaire, au moins chaque deuxième élément en forme de barre (5) étant monté de manière à pouvoir tourner dans les flasques frontales (2,3) et entraîné par moteur, l'entraînement forcé se faisant par l'intermédiaire de têtes d'entraînement montées à une extrémité des éléments en forme de barre (5) et passant à travers l'un des flasques frontales (2).

2. Appareil selon la revendication 1, caractérisé en ce que lesdits éléments en forme de barres (4,5) sont arrangés à des distances angulaires regulières et en ce qu'au moins chaque deuxième élément (5) est entraîné par moteur.

3. Appareil selon la revendication 1 ou 2, caractérisé en ce que les éléments entraînés (5) sont entraînés par un entraînement (7) commun.

4. Appareil selon la revendication 3, caractérisé en ce que l'entraînement (7) se fait au moyen d'une chaîne, d'une courroie dentée ou similaire, agissant sur des têtes d'entraînement (6) prévues à une extrémité des éléments en forme de barres (5).

**5.** Appareil selon la revendication 4, caractérisé en ce que les éléments en forme de barres (5) entraînés s'étendent à travers une paroi frontale terminale (2) du tambour (1) et en ce que les têtes d'entraînement (6) sont prévues sur la face extérieure de la paroi frontale (2).

**6.** Appareil selon l'une des revendications 1-5, caractérisé en ce que l'entraînement des éléments en forme de barres (5) se fait au moyen de l'entraînement des moyens (11) d'amenée et d'avance de la bande, les entraînement étant synchronisés de telle manière à ce que la vitesse circonférentielle des éléments en forme de barres (5) soit égale à la vitesse circonférentielle des rouleaux d'entraînement (8,9) pour la bande ou pour le tube.

**7.** Appareil selon l'une des revendications 1-5, caractérisé en ce que la vitesse de rotation des éléments entraînés (5) est variable.

**8.** Appareil selon l'une des revendications 1-7, caractérisé en ce que la surface des éléments entraînés (5) formant le cylindre du tambour sont munis d'un revêtement à coefficient de friction augmenté ou ils présentent une surface rugueuse ou structurée.

**9.** Appareil selon l'une des revendrications 1-8, caractérisé en ce que les moyens pour interconnecter les bords latéraux en aboutement de la bande comprennent un appareil à souder (15), plus particulièrement un appareil de soudage par ultrasons.

**10.** Appareil selon l'une des revendications 1-9, caractérisé par des moyens (20) pour chauffer la bande avant son introduction dans le tambour.

Fig. 1

Fig. 2

Fig. 3

Fig.4

Fig.5